(19) Europäisches Patentamt / European Patent Office / Office européen des brevets

(11) **EP 4 306 336 B1**

(12) **EUROPEAN PATENT SPECIFICATION**

(45) Date of publication and mention
of the grant of the patent:
**08.04.2026 Bulletin 2026/15**

(21) Application number: **22766662.5**

(22) Date of filing: **27.01.2022**

(51) International Patent Classification (IPC):
**B60C 19/12** $^{(2006.01)}$   **B60C 3/04** $^{(2006.01)}$

(52) Cooperative Patent Classification (CPC):
**B60C 19/122; B60C 3/04; B60C 19/002**

(86) International application number:
**PCT/JP2022/003183**

(87) International publication number:
**WO 2022/190695 (15.09.2022 Gazette 2022/37)**

(54) **SEALANT TIRE**

DICHTUNGSREIFEN

PNEU D'ÉTANCHÉITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.03.2021 JP 2021037449**

(43) Date of publication of application:
**17.01.2024 Bulletin 2024/03**

(73) Proprietor: **Sumitomo Rubber Industries, Ltd.
Kobe-shi, Hyogo 651-0072 (JP)**

(72) Inventor: **MORI, Kenji
Kobe-shi, Hyogo 651-0072 (JP)**

(74) Representative: **TBK
Bavariaring 4-6
80336 München (DE)**

(56) References cited:
| | |
|---|---|
| EP-A1- 2 125 392 | JP-A- 2010 513 120 |
| JP-A- 2018 003 007 | JP-A- 2018 003 007 |
| JP-A- 2018 069 978 | JP-A- 2018 187 994 |
| US-A1- 2020 122 420 | |

**Description**

TECHNICAL FIELD

The present invention relates to a sealant tire.

BACKGROUND ART

Patent Document 1 discloses a tire having improved fuel efficiency by increasing an outer diameter of the tire with respect to a grounding width of the tire as compared with a conventional tire. However, such a tire having a narrow-width, large diameter has a small grounding area, and thus there is a problem that it is difficult to secure steering stability.
Patent Document 2 discloses a tire using a sealant material that is excellent in sealing performance against a tear.
Patent document 3 discloses a rubber composition for sealant material, which has an elongation at break of 800% or more when a tensile test is conducted at the tensile speed of 3.0 m/s and the test temperature of -20°C.
Patent document 4 discloses a tire comprising at least two sidewalls, a crown provided radially externally with a tread, a carcass-type reinforcing structure and a crown reinforcement, the inner surface of the sidewalls and the crown forming an inner wall of the tire. According to the invention, at least one portion of said wall is covered with a self-sealing ply comprising a styrene thermoplastic elastomer and the tire can have a given working inflation pressure Pg. For any temperature within a given temperature range of between +30°C and +100°C, the self-sealing ply has a loss factor tg delta of less than 0.2 and a dynamic modulus G* of less than Pg, tg delta and G* being measured at a frequency of 10 Hz.

PRIOR ART DOCUMENT

Patent Document

    Patent Document 1: WO 2012/176476 A1
    Patent Document 2: WO 2017/094653 A1
    Patent Document 3: JP 2018 - 003007 A
    Patent document 4: EP 2 125 392 A1

SUMMARY OF THE INVENTION

PROBLEM TO BE SOLVED BY THE INVENTION

It is an object of the present invention to provide a sealant tire having improved overall performance of steering stability and air sealing performance.

MEANS TO SOLVE THE PROBLEM

As a result of intensive studies, it was found that, in a tire having a narrow-width, large diameter that satisfies predetermined requirements for a tire cross-sectional width and an outer diameter, the above-described problem can be solved by setting a dynamic complex elastic modulus of a sealant layer within a predetermined range.
The object is achieved by a sealant tire having the features of claim 1. Advantageous further developments are defined in the dependent claims.

EFFECT OF THE INVENTION

According to the present invention, provided is a sealant tire having improved overall performance of steering stability and air sealing performance.

BRIEF DESCRIPTION OF THE DRAWINGS

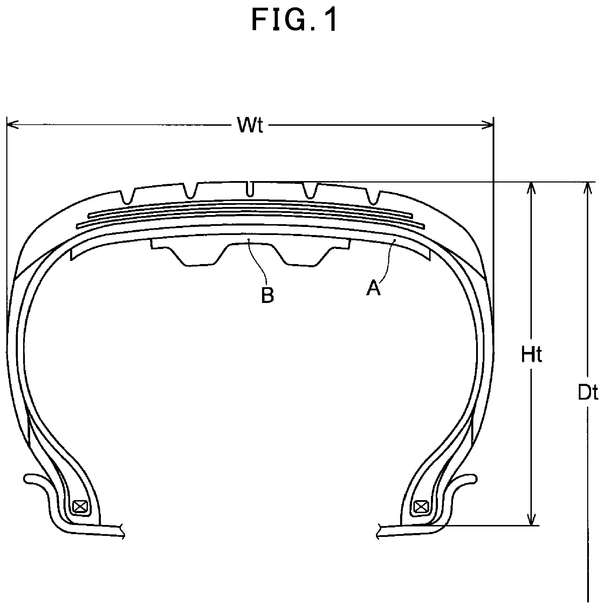

FIG. 1 is an explanatory view schematically showing one example of a cross section of a sealant tire.

## EMBODIMENT FOR CARRYING OUT THE INVENTION

The tire that is one embodiment of the present invention is a sealant tire comprising a sealant layer on an inner peripheral surface of the tire, wherein, when a cross-sectional width and an outer diameter of the sealant tire are defined as Wt, in mm, and Dt, in mm, respectively, the sealant tire being mounted on a standardized rim and having an internal pressure of 250 kPa, Wt and Dt satisfy the following inequality, and wherein a dynamic complex elastic modulus G* measured under a condition of a strain of 100% and a frequency of 0.1 Hz in an atmosphere of 100°C in accordance with ISO 13145 for the sealant layer is 0.50 to 3.50 kPa (preferably 0.55 to 3.20 kPa, more preferably 0.60 to 2.90 kPa, further preferably 0.65 to 2.70 kPa):

$$1600 \leqq (Dt^2 \times \pi/4)/Wt \leqq 2827.4 \ (1).$$

In the present invention, a tire cross-sectional width Wt, in mm, a tire cross-sectional height Ht, in mm, and a tire outer diameter Dt, in mm, are measured in a state where the tire is mounted on a standardized rim, filled with air so as to have an internal pressure of 250 kPa or more, and applied with no load. Besides, the "tire cross-sectional width" is a maximum width between outer surfaces of sidewalls excluding, if any, patterns or characters on the side surface of the tire in the above-described state. The tire cross-sectional height Ht is a distance from a bottom surface of a bead part to an outermost surface of a tread, which is half a difference between the outer diameter of the tire and a nominal size of a rim.

A "standardized rim" is a rim in a standard system including a standard on which the tire is based, defined for each tire by the standard. For example, it is a "standard rim" in JATMA, "Design Rim" in TRA, or "Measuring Rim" in ETRTO. Besides, if a size of the tire is not specified in the above-described standard system, the standardized rim is a rim which can be assembled to the tire and whose width is narrowest among rims having the smallest diameter that does not cause air leakage between the rim and the tire.

In the sealant tire of the present invention, a shape of the tire is configured so that an area of the tire when viewed from a lateral direction is larger than the cross-sectional width of the tire within a predetermined range. As a result, heat dissipation property of a side part can be improved, and a sufficient fuel efficiency can be exhibited. Specifically, the sealant tire is characterized in that, when the cross-sectional width and the outer diameter of the tire are defined as Wt, in mm, and Dt, in mm, respectively, the tire being mounted on a standardized rim and having an internal pressure of 250 kPa, Wt and Dt satisfy the following inequality (1):

$$1600 \leqq (Dt^2 \times \pi/4)/Wt \leqq 2827.4 \ (1).$$

When the tire has a shape that satisfies the inequality (1), an area, in mm$^2$, of the tire when viewed from the lateral direction with respect to the tire cross-sectional width Wt, in mm, that is, $[(Dt/2)^2 \times \pi) = (Dt^2 \times \pi/4)]$ is properly secured, and heat dissipation property of the side part is improved, so that rolling resistance is sufficiently reduced, realizing a good fuel efficiency.

Here, when Dt increases, the value of the inequality (1) increases, and conversely, when Dt decreases, the value decreases. On the other hand, when Wt increases, the value of the inequality (1) decreases, and conversely, when Wt decreases, the value increases. Therefore, paying attention to this point, Dt and Wt can be adjusted so as to satisfy the inequality (1). Besides, the value of the inequality (1) is preferably 1963.4 or more, more preferably 2000 or more. Moreover, the value of the inequality (1) is preferably 2800 or less, more preferably 2700 or less, further preferably 2600 or less.

Specific examples of a tire size satisfying the inequality (1) include 125/65R19, 145/60R18, 145/60R19, 155/55R18, 155/55R19, 155/70R17, 155/70R19, 165/55R20, 165/55R21, 165/60R19, 165/65R19, 165/70R18, 175/55R19, 175/55R20, 175/55R22, 175/60R18, 185/55R19, 185/60R20, 195/50R20, 195/55R20, 205/55R16, and the like.

However, when the tire having the above-described shape is produced, a centrifugal force increases during rolling, and the radius of the tire largely increases during rolling. As a result, a grounding pressure will become uneven, which leads to a concern that steering stability may deteriorate. In particular, the wider the tire cross-sectional width Wt is, the greater the difference between a grounding pressure at a tread center part and a grounding pressure at a tread shoulder part easily becomes, which is considered to easily cause deterioration of steering stability.

Therefore, if the dynamic complex elastic modulus G* of the sealant layer satisfies the above-described requirements, a sealant tire obtained will have improved overall performance of steering stability and air sealing performance. The reason for that is not intended to be bound by any theory, but is considered as follows.

By providing a sealant layer having a dynamic complex elastic modulus G* of 0.50 kPa or more against torsion of the tire, a reaction force against torsion of the tire is increased while maintaining the shape of the sealant layer, so that it is considered that steering stability is improved. **In** addition, it is considered that, by setting the dynamic complex elastic modulus G* of the sealant layer to 3.50 kPa or less, fluidity of the sealant layer can be made appropriate, and by sealing a tear, air sealing performance can be secured.

Dt/G* of the sealant tire of the present invention is 240 or more, preferably 330 or more, further preferably 420 or more, particularly preferably 500 or more. Since the sealant of the present invention has a large tire outer diameter and a small dynamic complex elastic modulus, there is a concern that steering stability may deteriorate. Therefore, by reducing the tire outer diameter according to the dynamic complex elastic modulus, steering stability can be improved. Moreover, the Dt/G* is preferably 1500 or less, more preferably 1300 or less, further preferably 1100 or less, particularly preferably 1000 or less.

Wt/G* of the sealant tire of the present invention is preferably 400 or less, more preferably 320 or less, further preferably 300 or less, particularly preferably 280 or less. Since the sealant tire of the present invention has a small tire cross-sectional width and a small dynamic complex elastic modulus, there is a concern that steering stability may deteriorate. Therefore, by increasing the tire cross-sectional width according to the dynamic complex elastic modulus, steering stability can be improved. Moreover, the Wt/G* is preferably 30 or more, more preferably 40 or more, further preferably 50 or more, particularly preferably 60 or more.

**In** the sealant tire of the present invention, when a cross-sectional area of the sealant layer is defined as S, in $mm^2$, S/G* is preferably 3000 or less, more preferably 2000 or less, further preferably 1500 or less, further preferably 1000 or less, further preferably 900 or less, further preferably 850 or less, particularly preferably 800 or less. Moreover, the S/G* is preferably 100 or more, preferably 150 or more, further preferably 200 or more, further preferably 250 or more, particularly preferably 300 or more. Since the sealant tire of the present invention has a small tire cross-sectional width and a small dynamic complex elastic modulus, there is a concern that steering stability may deteriorate. Therefore, by increasing the cross-sectional area of the sealant layer according to the dynamic complex elastic modulus, it is considered that steering stability can be improved and air sealing performance can also be ensured.

G*×S/Wt of the sealant tire of the present invention is preferably 30 or less, more preferably 20 or less, further preferably 10 or less, further preferably 8.0 or less, particularly preferably 7.0 or less. Moreover, the G*×S/Wt is preferably 0.5 or more, preferably 1.0 or more, further preferably 1.5 or more. Since the sealant tire of the present invention has a small tire cross-sectional width and a small dynamic complex elastic modulus, there is a concern that steering stability may deteriorate. Therefore, by increasing the cross-sectional area of the sealant layer according to the dynamic complex elastic modulus, it is considered that steering stability can be improved and air sealing performance can also be ensured.

The sealant tire of the present invention preferably has a flattening ratio of 40% or more, more preferably 45% or more, further preferably 47.5% or more, further preferably 50% or more, further preferably 52.5% or more, particularly preferably 55% or more. When the flattening ratio is within the above-described ranges, a height of a side part of the tire can be increased, and a local deformation of the tire can be suppressed, so that durability of the tire can be further enhanced. Besides, the flattening ratio (%) is calculated from the cross-sectional height Ht, in mm, and the cross-sectional width Wt, in mm, of the tire when the internal pressure is 250 kPa by (Ht/Wt)×100.

The outer diameter Dt of the tire is preferably 515 mm or more, more preferably 558 mm or more, further preferably 585 mm or more, particularly preferably 632 mm or more. Moreover, the outer diameter Dt of the tire is preferably less than 843 mm, more preferably less than 725 mm, further preferably less than 707 mm, further preferably less than 685 mm, particularly preferably less than 655 mm.

The cross-sectional width Wt of the tire is preferably 115 mm or more, more preferably 125 mm or more, further preferably 150 mm or more, particularly preferably 170 mm or more. Moreover, the cross-sectional width Wt of the tire is preferably less than 305 mm, more preferably less than 245 mm, further preferably less than 210 mm, particularly preferably less than 200 mm.

The cross-sectional height Ht of the tire is preferably 37 mm or more, more preferably 60 mm or more, further preferably 80 mm or more. Moreover, the cross-sectional height Ht of the tire is preferably less than 180 mm, more preferably less than 152 mm, further preferably less than 115 mm.

In the sealant tire of the present invention, (Dt-2×Ht) is preferably 360 mm or more, more preferably 380 mm or more, further preferably 400 mm or more, particularly preferably 420 mm or more, from the viewpoint of ride comfort stability during running. On the other hand, it is preferably less than 560 mm, more preferably less than 530 mm, further preferably less than 510 mm, from the viewpoint of deformation of a tread part.

In addition, a virtual volume V, in $mm^3$, of a space occupied by the tire when it is mounted on a standardized rim and has an internal pressure of 250 kPa can be calculated based on the cross-sectional width Wt, in mm, the outer diameter Dt, in mm, and the cross-sectional height Ht, in mm, by the following equation (2):

$$V=[(Dt/2)^2-\{(Dt/2)-Ht\}^2]\times\pi\times Wt \quad (2).$$

The virtual volume V is preferably $1.2\times10^7$ $mm^3$ or more, more preferably $1.6\times10^7$ $mm^3$ or more, further

preferably $2.0 \times 10^7$ mm$^3$ or more. On the other hand, the virtual volume V is preferably less than $8.8 \times 10^7$ mm$^3$, more preferably less than $6.6 \times 10^7$ mm$^3$, further preferably less than $4.4 \times 10^7$ mm$^3$, particularly preferably less than $3.9 \times 10^7$ mm$^3$.

In addition, in the sealant tire of the present invention, the virtual volume V, in mm$^3$, and the cross-sectional width Wt, in mm, of the tire preferably satisfy the following inequality (3):

$$[(V+1.5 \times 10^7)/Wt] \leqq 4.02 \times 10^5 \quad (3).$$

As such, by decreasing the virtual volume V of the tire according to a decrease in the cross-sectional width Wt of the tire and decreasing the volume of the tire itself, a growth rate of the outer diameter due to a centrifugal force can be reduced, so that it is considered that an amount of deformation in a bead part of the side part can be decreased and rounding of the tread part can also be suppressed.

The virtual volume V, in mm$^3$, and the cross-sectional width Wt, in mm, of the tire more preferably satisfy the following inequality (4), further preferably satisfy the following inequality (5):

$$[(V+2.0 \times 10^7)/Wt] \leqq 4.02 \times 10^5 \quad (4).$$

$$[(V+2.5 \times 10^7)/Wt] \leqq 4.02 \times 10^5 \quad (5).$$

A procedure for producing a sealant tire comprising a sealant layer that is one embodiment of the present invention will be described in detail below. However, the following descriptions are illustrative for explaining the present invention, and are not intended to limit the technical scope of the present invention to this description range only. Besides, in the present specification, a numerical range identified with "to" means to include the numerical values of both ends.

<Rubber component>

The sealant tire can be conventionally produced by a known method, for example, a method of preparing a sealant material by mixing each component that constitutes the sealant material, and then attaching the obtained sealant material to the inner peripheral surface of the tire by coating or the like to form a sealant layer, and the like. The sealant tire has a sealant layer inside an inner liner in a tire radial direction. The sealant material is not particularly limited as long as it has adhesiveness, and a usual rubber composition used for puncture sealing of a tire can be used.

The rubber composition constituting the sealant layer according to the present invention (which hereinafter may be simply referred to as the "rubber composition of the present invention") preferably comprises a butyl-based rubber as a rubber component. Examples of the butyl-based rubber include a butyl rubber (IIR), and a halogenated butyl rubber (X-IIR) such as a brominated butyl rubber (Br-IIR) and a chlorinated butyl rubber (Cl-IIR) and the like. Among them, a halogenated butyl rubber is preferable. Among them, a brominated butyl rubber is particularly appropriately used because of its rapid reaction. Besides, as the butyl-based rubber, a pelletized one is preferably used. As a result, the butyl-based rubber can be accurately and appropriately supplied to a continuous kneader, and the sealant material can be produced efficiently.

As rubber components other than the butyl-based rubber, other components such as a natural rubber (NR), an isoprene rubber (IR), a diene-based rubber such as a butadiene rubber (BR), a styrene-butadiene rubber (SBR), a styrene-isoprene-butadiene rubber (SIBR), an ethylene-propylene-diene rubber (EPDM), a chloroprene rubber (CR), an acrylonitrile-butadiene rubber (NBR), and the like may be used in combination. A content of the butyl-based rubber in 100% by mass of the rubber component is preferably 50% by mass or more, more preferably 60% by mass or more, further preferably 70% by mass or more, further preferably 80% by mass or more, further preferably 81% by mass or more, further preferably 85% by mass or more, further preferably 87% by mass or more, further preferably 90% by mass or more, particularly preferably 95% by mass or more, from the viewpoints of fluidity, etc. Moreover, the rubber component may be one consisting of a butyl-based rubber.

The rubber composition of the present invention may be compounded with, for example, a composite material comprising at least one functional group having a metal coordinating ability in its molecular structure. Here, the functional group having a metal coordinating ability is not particularly limited as long as it has the metal coordinating ability, examples of which include, for example, a functional group comprising a metal coordinating atom such as oxygen, nitrogen, sulfur, and the like. Specific examples of the functional group include a dithiocarbamic acid group, a phosphoric acid group, a carboxylic acid group, a carbamic acid group, a dithioic acid group, an aminophosphoric acid group, a thiol group, and the like. The above-described functional group may be compounded alone, or two or more thereof may be compounded.

Examples of the coordinating metal for the functional group include, for example, Fe, Cu, Ag, Co, Mn, Ni, Ti, V, Zn, Mo, W, Os, Mg, Ca, Sr, Ba, Al, Si, and the like. For example, in a polymer material compounded with a compound having such a metal atom ($M^1$) and comprising a functional group (-COO, etc.) having a metal coordinating ability, each $-COOM^1$ is subjected to coordinate bond so that a large number of $-COOM^1$ are overlapped, thereby forming a cluster in which metal atoms are aggregated. Besides, a compounding amount of the above-described metal atom ($M^1$) is preferably 0.01 to 200 parts by mass based on 100 parts by mass of a polymer component in a polymer material.

The rubber composition of the present invention preferably comprises a liquid polymer. Examples of the liquid polymer include, for example, a liquid polybutene, a liquid polyisobutene, a liquid polyisoprene, a liquid polybutadiene, a liquid poly $\alpha$-olefin, a liquid isobutylene, a liquid ethylene $\alpha$-olefin copolymer, a liquid ethylene propylene copolymer, and a liquid ethylenebutylene copolymer, and the like. Among them, a liquid polybutene is preferable because of its good compatibility with a butyl-based rubber. Examples of the liquid polybutene include a copolymer mainly composed of isobutene and further having a molecular structure of a long-chain hydrocarbon obtained by reacting normal butene, and the like, and a hydrogenated liquid polybutene can also be used.

A kinematic viscosity of the liquid polymer at 100°C is preferably 100 cSt (100 mm$^2$/s) or more, more preferably 200 cSt or more, further preferably 5000 cSt or more, particularly preferably 1000 cSt or more, from the viewpoint of shape retention of a sealant material. Moreover, it is preferably 6000 cSt (6000 mm$^2$/s) or less, more preferably 5500 cSt or less, further preferably 5000 cSt or less, particularly preferably 4500 cSt or less, from the viewpoint of air sealing performance. Besides, in the present invention, the kinematic viscosity of the liquid polymer is measured according to ASTM D445.

A content of the liquid polymer based on 100 parts by mass of the rubber component is preferably 50 parts by mass or more, more preferably 100 parts by mass or more, further preferably 150 parts by mass or more, from the viewpoint of air sealing performance. Moreover, it is preferably 400 parts by mass or less, more preferably 350 parts by mass or less, further preferably 300 parts by mass or less, from the viewpoint of shape retention of a sealant material.

The rubber composition of the present invention preferably comprises an inorganic filler. Examples of the inorganic filler include, for example, carbon black, silica, an inorganic filler represented by $mM^2 \cdot \times SiOy \cdot zH_2O$ (wherein $M^2$ represents at least one metal selected from the group consisting of aluminum, calcium, magnesium, titanium, and zirconium, or represents an oxide, a hydroxide, a hydrate, or a carbonate thereof; m represents a numerical value ranging from 1 to 5, x from 0 to 10, y from 2 to 5, and z from 0 to 10.), and the like. Carbon black is preferable from the viewpoint of preventing deterioration due to ultraviolet rays.

Specific examples of the inorganic filler represented by $mM^2 \cdot \times SiOy \cdot zH_2O$ include aluminum hydroxide ($Al(OH)_3$), alumina ($Al_2O_3$, $Al_2O_3 \cdot 3H_2O$), clay ($Al_2O_3 \cdot 2SiO_2$), kaolin ($Al_2O_3 \cdot 2SiO_2 \cdot 2H_2O$), pyrophyllite ($Al_2O_3 \cdot 4SiO_2 \cdot H_2O$), bentonite ($Al_2O_3 \cdot 4SiO_2 \cdot 2H_2O$), aluminum silicate ($Al_2SiO_5$, $Al_4(SiO_2)_3 \cdot 5H_2O$, etc.), aluminum calcium silicate ($Al_2O_3 \cdot CaO \cdot 2SiO_2$), calcium hydroxide ($Ca(OH)_2$), calcium oxide (CaO), calcium silicate ($Ca_2SiO_4$), magnesium calcium silicate ($CaMgSiO_4$), magnesium hydroxide ($Mg(OH)_2$), magnesium oxide (MgO), talc ($MgO \cdot 4SiO_2 \cdot H_2O$), attapulgite ($5MgO \cdot 8SiO_2 \cdot 9H_2O$), magnesium aluminum oxide ($MgO \cdot Al_2O_3$), titanium white ($TiO_2$), titanium black ($Ti_nO_{2n-1}$), and the like. In a rubber composition comprising such a filler, a cluster of aggregated fillers are formed. Besides, a compounding amount of the above-described filler is preferably 10 to 200 parts by mass based on 100 parts by mass of the rubber component.

Carbon black is not particularly limited, and those common in the tire industry can be used such as GPF, FEF, HAF, ISAF, SAF, and the like, and specifically, N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991, and the like can be appropriately used, and in-house synthesized products and the like can also be appropriately used. These carbon black may be used alone, or two or more thereof may be used in combination.

A content of the inorganic filler (preferably carbon black) based on 100 parts by mass of the rubber component is preferably 1 part by mass or more, more preferably 5 parts by mass or more, further preferably 10 parts by mass or more, from the viewpoint of suppressing deterioration of sealing property caused by deterioration due to ultraviolet rays. Moreover, the content is preferably 50 parts by mass or less, more preferably 40 parts by mass or less, further preferably 35 parts by mass or less, from the viewpoint of suppressing deterioration of sealing property due to an increase in viscosity of a sealant material.

(Other compounding agents)

The rubber composition of the present invention can appropriately comprise compounding agents conventionally and commonly used in the tire industry, such as, for example, oil, a resin component, wax, zinc oxide, stearic acid, an antioxidant, a cross-linking agent, a vulcanization accelerator, and the like, in addition to the above-described components.

Examples of oil include, for example, a process oil, vegetable fats and oils, animal fats and oils, and the like. Examples of the process oil include a paraffin-based process oil, a naphthene-based process oil, an aroma-based process oil, and the like. In addition, as an environmental measure, process oil having a low content of a polycyclic aromatic compound (PCA) can also be used. Examples of the process oil having a low content of a PCA include a mild extraction solution (MES), a treated distillate aromatic extract (TDAE), a heavy naphthenic oil, and the like.

A content of oil when compounded based on 100 parts by mass of the rubber component is preferably 1 part by mass or more, more preferably 3 parts by mass or more, further preferably 5 parts by mass or more. Moreover, the content is preferably 40 parts by mass or less, more preferably 20 parts by mass or less, further preferably 15 parts by mass or less.

The resin component is not particularly limited, examples of which include a petroleum resin, a terpene-based resin, a rosin-based resin, a phenol-based resin, and the like, which are commonly used in the tire industry. Among them, a petroleum resin is preferable. These resin components may be used alone, or two or more thereof may be used in combination.

A content of the resin component when compounded based on 100 parts by mass of the rubber component is preferably 1 part by mass or more, more preferably 5 parts by mass or more, further preferably 10 parts by mass or more, particularly preferably 15 parts by mass or more. Moreover, the content is preferably 100 parts by mass or less, more preferably 60 parts by mass or less, further preferably 40 parts by mass or less, particularly preferably 30 parts by mass or less.

A content of stearic acid when compounded based on 100 parts by mass of the rubber component is preferably 0.5 parts by mass or more, more preferably 1 part by mass or more, from the viewpoint of processability. Moreover, it is preferably 10 parts by mass or less, more preferably 5 parts by mass or less, from the viewpoint of vulcanization rate.

A content of zinc oxide when compounded based on 100 parts by mass of the rubber component is preferably 1 part by mass or more, more preferably 2 parts by mass or more, further preferably 4 parts by mass or more, particularly preferably 6 parts by mass or more, from the viewpoint of shape retention of a sealant material. Moreover, it is preferably 20 parts by mass or less, more preferably 18 parts by mass or less, further preferably 15 parts by mass or less, particularly preferably 12 parts by mass or less, from the viewpoint of air sealing performance.

Examples of a vulcanizing agent include, for example, sulfur, organic peroxide, alkylphenol/sulfur chloride condensate, sodium hexamethylene-1,6-bisthiosulfate dihydrate, 1,6-bis(N,N'-dibenzylthiocarbamoyldithio)hexane, and the like. As sulfur, a powdery sulfur, an oil processing sulfur, a precipitated sulfur, a colloidal sulfur, an insoluble sulfur, a highly dispersible sulfur, and the like can be used.

A content of the vulcanizing agent when compounded based on 100 parts by mass of the rubber component is preferably less than 1.0 part by mass, more preferably less than 0.5 parts by mass, further preferably less than 0.1 parts by mass, particularly preferably less than 0.01 parts by mass, from the viewpoint of suppressing heat aging of a sealant layer to secure air sealing performance until the end of running, or the rubber composition may not comprise a vulcanizing agent. Besides, a content of the vulcanizing agent when an oil-containing sulfur is used as the vulcanizing agent shall be a total content of pure sulfur comprised in the oil-containing sulfur.

Examples of the vulcanization accelerator include, but not particularly limited to, for example, sulfenamide-based, thiazole-based, thiuram-based, thiourea-based, guanidine-based, dithiocarbamate-based, aldehyde-amine-based, aldehyde-ammonia-based, imidazoline-based, xanthate-based vulcanization accelerators, and a quinonedioxime compound (quinoid compound) vulcanization accelerator. Among them, sulfenamide-based vulcanization accelerators, thiazole-based vulcanization accelerators, and guanidine-based vulcanization accelerators are preferable from the viewpoint that desired effects can be obtained more appropriately.

Examples of the sulfenamide-based vulcanization accelerator include N-cyclohexyl-2-benzothiazolyl sulfenamide (CBS), N-(tert-butyl)-2-benzothiazolyl sulfenamide (TBBS), N-oxyethylene-2-benzothiazolyl sulfenamide, **N,N'-diisopropyl-2-benzothiazolyl** sulfenamide, N,N-dicyclohexyl-2-benzothiazolyl sulfenamide, and the like. Examples of the thiazole-based vulcanization accelerator include 2-mercaptobenzothiazole, di-2-benzothiazolyl disulfide, and the like. Examples of the thiuram-based vulcanization accelerator include tetramethylthiuram monosulfide, tetramethylthiuram disulfide, tetrabenzylthiuram disulfide (TBzTD), and the like. Examples of the guanidine-based vulcanization accelerator include diphenylguanidine (DPG), diorthotrilguanidine, orthotrilbiguanidine, and the like. Examples of the dithiocarbamate-based vulcanization accelerator include zinc dimethyldithiocarbamate (ZnMDC) and the like. These vulcanization accelerators may be used alone, or two or more thereof may be used in combination.

A content of the vulcanization accelerator when compounded based on 100 parts by mass of the rubber component is preferably 8.0 parts by mass or less, more preferably 7.0 parts by mass or less, further preferably 6.0 parts by mass or less. Moreover, a lower limit value of the content can be, but not particularly limited to, for example, 0.1 parts by mass or more, 0.5 parts by mass or more, 1.0 part by mass or more, 1.5 parts by mass or more, 2.0 parts by mass or more, or 2.5 parts by mass.

In addition, the content of the vulcanization accelerator can be, for example, less than 1.0 part by mass, less than 0.5 parts by mass, less than 0.1 parts by mass, or less than 0.01 parts by mass, from the viewpoint of suppressing heat aging of the sealant layer to ensure air sealing performance until the end of running, or the rubber composition may not comprise a vulcanization accelerator.

A content of the thiuram-based vulcanization accelerator based on 100 parts by mass of the rubber component is preferably less than 1.0 part by mass, more preferably less than 0.5 parts by mass, further preferably less than 0.1 parts by mass, particularly preferably less than 0.01 parts by mass, or the rubber composition may not comprise a thiuram-based vulcanization accelerator.

A content of the dithiocarbamate-based vulcanization accelerator based on 100 parts by mass of the rubber component is preferably less than 1.0 part by mass, more preferably less than 0.5 parts by mass, further preferably less than 0.1 parts by mass, particularly preferably less than 0.01 parts by mass, or the rubber composition may not comprise a dithiocarbamate-based vulcanization accelerator.

By mixing each of the above-mentioned materials to prepare a sealant material and applying the prepared sealant material to the inner peripheral surface of the tire (preferably the inner part of the inner liner in the tire radial direction), a sealant tire comprising a sealant layer A on the inner side of the inner liner in the tire radial direction can be produced. Mixing of each material constituting the sealant material can be performed using, for example, a known continuous kneader. Among them, it is preferable to perform mixing using a co-rotating or counter-rotating multi-screw kneading extruder, particularly a twin-screw kneading extruder.

Mixing in a continuous kneader (particularly a twin-screw kneading extruder) is preferably performed at a barrel temperature of 30°C (preferably 50°C) to 150°C from the viewpoints of ease of mixing, extrudability, dispersibility, and cross-linking reaction.

A mixing time of the material is preferably 1 to 30 minutes, more preferably 2 to 20 minutes, from the viewpoint of sufficient mixability. Besides, in the present invention, the mixing time refers to a residence time from a time of supplying to the continuous kneader (particularly the twin-screw kneading extruder) to a discharging time.

The temperature of the sealant material discharged from a discharge port can be adjusted according to the number of revolutions of the screw of the continuous kneader (particularly the twin-screw kneading extruder) or setting of a temperature controller, and a curing acceleration rate of the sealant material can also be controlled. When the number of revolutions of the screw of the continuous kneader (particularly the twin-screw kneading extruder) is increased, kneadability and material temperature are increased. Besides, the number of revolutions of the screw does not affect a discharge amount. The number of revolutions of the screw is preferably 50 to 700 rpm, more preferably 50 to 550 rpm, from the viewpoints of sufficient mixability and control of the curing acceleration rate.

The temperature of the sealant material discharged from the discharge port of the continuous kneader (particularly the twin-screw kneading extruder) is preferably 70 to 150°C, more preferably 90 to 130°C, from the viewpoints of sufficient mixability and control of the curing acceleration rate. When the temperature of the sealant material is within the above-described ranges, a cross-linking reaction starts from the time of application, allowing for the sealant material to have a good adhesiveness to the inner peripheral surface of the tire, and the cross-linking reaction develops more appropriately, so that a sealant tire having a high sealability can be produced, which requires no cross-linking step.

Application of the sealant material to the inner peripheral surface of the tire may be performed at least on an inner peripheral surface of the tire corresponding to a tread part, more preferably at least on an inner peripheral surface of the tire corresponding to a breaker. By omitting application of the sealant material to parts that do not need to be applied, a sealant tire having a better productivity can be produced. Here, the inner peripheral surface of the tire corresponding to the tread part means an inner peripheral surface of a tire located on an inner side of a tread part in contact with a road surface in a tire radial direction, and the inner peripheral surface of the tire corresponding to the breaker means an inner peripheral surface of a tire located on an inner side of the breaker in a tire radial direction. Besides, the breaker is a member provided with a cord such as a steel cord and the like, which is arranged inside a tread and on an outer side of a carcass in a radial direction.

The sealant layer A is preferably formed by applying a substantially string-shaped sealant material continuously and spirally to an inner peripheral surface of a tire. When the sealant material has a substantially string-like shape, a sealant layer A consisting of one layer of a sealant material can be formed by applying the sealant material continuously and spirally to the inner peripheral surface of the tire. When the sealant material has a substantially string-like shape, the applied sealant material has a certain thickness, so that uniformity of the tire can be prevented from deteriorating, even for the sealant layer consisting one layer of a sealant material, which has a good weight balance, and a sealant tire having a good sealing property can be produced. Moreover, it is sufficient to apply only one layer of the sealant material without laminating many layers, so that the sealant tire can be produced with a better productivity.

The number of times a sealant material is wound around an inner peripheral surface of a tire is preferably 20 to 70 times, more preferably 20 to 60 times, further preferably 35 to 50 times, from the reasons that uniformity of the tire can be prevented from deteriorating to achieve a good weight balance, and that a sealant tire having a good sealing property can be produced with a better productivity. Here, the number of times of winding being two times means that the sealant material is applied so as to make two turns around the inner peripheral surface of the tire.

A thickness of the sealant layer A is preferably 1.0 mm or more, more preferably 1.5 mm or more, further preferably 2.0 mm or more, particularly preferably 2.5 mm or more, from the viewpoint of reliably closing a puncture hole when a tire is punctured. Moreover, an upper limit value of the thickness of the sealant layer A is, but not particularly limited to, preferably 10.0 mm or less, more preferably 8.0 mm or less, further preferably 5.0 mm or less, particularly preferably 4.0 mm or less. Besides, the thickness of the sealant material can be adjusted by adjusting a rotational speed of the tire, a moving speed in the tire width direction, a distance between a tip of a nozzle and the inner peripheral surface of the tire, etc.

It is preferable that the thickness of the sealant layer A is substantially constant. As a result, uniformity of the tire

**EP 4 306 336 B1**

can be further prevented from deteriorating, and a sealant tire having a better weight balance can be produced. Here, in the present specification, the substantially constant thickness means that the thickness varies in a range from 90 to 110% (preferably from 95 to 105%, more preferably from 98 to 102%, further preferably from 99 to 101%).

A cross-sectional area S of the sealant layer A is preferably 50 mm$^2$ or more, more preferably 100 mm$^2$ or more, further preferably 150 mm$^2$ or more, particularly preferably 200 mm$^2$ or more. Moreover, the cross-sectional area S of the sealant layer A is preferably 1500 mm$^2$ or less, more preferably 1200 mm$^2$ or less, further preferably 1000 mm$^2$ or less, further preferably 800 mm$^2$ or less, further preferably 700 mm$^2$ or less, particularly preferably 600 mm$^2$ or less.

The dynamic complex elastic modulus G* in the present specification refers to a dynamic complex elastic modulus (kPa) measured under a condition of a strain of 100% and a frequency of 0.1 Hz in an atmosphere at 100°C in accordance with ISO 13145. The G* of the sealant layer A is 0.50 kPa or more, preferably 0.55 kPa or more, more preferably 0.60 kPa or more, further preferably 0.65 kPa or more, particularly preferably 0.70 kPa or more, from the viewpoint of maintaining the shape of the sealant to improve steering stability. On the other hand, the G* of the sealant layer is 3.50 kPa or less, preferably 3.20 kPa or less, more preferably 2.90 kPa or less, further preferably 2.70 kPa or less, further preferably 2.50 kPa or less, further preferably 2.30 kPa or less, particularly preferably 2.10 kPa or less, from the viewpoint of air sealing performance.

Besides, the G* of the sealant layer A can be appropriately adjusted depending on a content of a liquid polymer, a kinematic viscosity of the liquid polymer, a content of zinc oxide, and the like. Specifically, as the content of the liquid polymer increases, the value of G* tends to decrease, and conversely, as the content decreases, the value of G* tends to increase. As the kinematic viscosity of the liquid polymer increases, the value of G* tends to increase, and conversely, as the kinematic viscosity decreases, the value of G* tends to decrease. As the content of zinc oxide increases, the value of G* tends to increase, and conversely, as the content decreases, the value of G* tends to decrease.

An elongation at break (EB) (%) in the present specification refers to an elongation at break (elongation at cutting) measured under a condition of a tensile speed of 500 mm/sec in an atmosphere at 25°C in accordance with JIS K 6251:2017. The EB of the sealant layer A is preferably 500% or more, more preferably 520% or more, further preferably 540% or more, from the viewpoint of ensuring air sealing performance at a low temperature. Moreover, an upper limit of the EB is not particularly limited.

In the sealant tire of the present invention, a noise absorbing layer B may be provided on the inner side of the inner liner in the tire radial direction. Since the sealant material constituting the sealant layer A has an adhesive strength, the noise absorbing layer B can be easily provided on the inner side of the sealant layer A in the tire radial direction by contacting the noise absorbing layer B with the sealant layer A.

As the noise absorbing layer B, any one can be appropriately used as long as it can exhibit a noise suppressing effect in a tire lumen. The noise absorbing layer B is composed of, for example, a porous sponge material. The sponge material is a sponge-like porous structure, for example, a so-called sponge itself having open cells in which a rubber or a synthetic resin is foamed, as well as a web-like structure in which animal fibers, plant fibers, or synthetic fibers, etc. are entwined to be integrally coupled. Moreover, the "porous structure" includes a structure having open cells as well as closed cells. As the noise absorbing layer B, a sponge material made of polyurethane is appropriately used from the viewpoints of noise suppressing property, light weight property, foaming adjustability, durability, and the like.

EXAMPLE

Hereinafter, the present invention will be described based on Examples, though the present invention is not limited to these Examples.

Various chemicals used in Examples and Comparative examples are collectively shown below.
Butyl-based rubber: Bromobutyl 2255 manufactured by JSR Corporation (brominated butyl rubber)
Carbon black: DIABLACK H manufactured by Mitsubishi Chemical Corporation (N330)
Liquid polymer 1: HV-1900 manufactured by ENEOS Corporation (liquid polybutene, kinematic viscosity at 100°C: 3710 cSt)
Liquid polymer 2: HV-100 manufactured by ENEOS Corporation (liquid polybutene, kinematic viscosity at 100°C: 220 cSt)
Liquid polymer 3: LUCANT HC-1100 manufactured by Mitsui Chemicals, Inc. (liquid ethylene $\alpha$-olefin copolymer, kinematic viscosity at 100°C: 1100 cSt)
Resin component: Quintone A100 manufactured by Zeon Corporation (aliphatic hydrocarbon resin)
Zinc oxide: Zinc oxide No. 2 manufactured by Mitsui Mining & Smelting Co., Ltd.
Stearic acid: Bead stearic acid "CAMELLIA" manufactured by NOF CORPORATION

(Examples and Comparative examples)

According to the compounding formulations shown in Tables 1 and 2, a butyl-based rubber, carbon black, a liquid polymer, a resin component, zinc oxide, stearic acid, and, if necessary, a vulcanization accelerator were charged in a 3L twin-screw kneading extruder, and the mixture was kneaded under a condition of a barrel temperature at 120 to 135°C and 200 rpm to prepare a sealant material. The sealant material (substantially string-like shape, thickness: 3 mm, width: 4 mm) was extruded from the twin-screw kneading extruder and continuously attached in a spiral shape on the inner peripheral surface of each tire shown in Table 1 (size: 175/55R20, rim: 5.5×20J) and Table 2 (Size: 205/55R16, rim: 6.5×16J) through a nozzle to form a sealant layer, preparing a test tire. The following evaluations were performed on each of the obtained sealant materials and test tires.

<Measurement of dynamic complex elastic modulus G*>

For each rubber test piece prepared by being punched out, using a Premier RPA manufactured by Alpha Technologies, a dynamic complex elastic modulus G* was measured under a condition of a strain of 100% and a frequency of 0.1 Hz under an atmosphere at 100°C in accordance with ISO 13145.

<Tensile test>

A dumbbell-shaped No. 7 test piece with a thickness of 1 mm, which was cut out from the inside of the sealant layer of each test tire so that a tire circumferential direction became a tensile direction, was prepared, and a tensile test was conducted under a condition of a tensile speed of 500 mm/sec in an atmosphere at 25°C according to JIS K 6251: 2017 to measure an elongation at break EB (%). Besides, a thickness direction of a sample was defined as a tire radial direction.

<Steering stability>

Each test tire was mounted on all wheels of a vehicle (domestic FF vehicle, displacement of 2000 cc), and the vehicle was made run a loop test course on a dry asphalt road surface, and the lap time at that time was measured. Steering stability was indicated as an index by the following equation. The results show that the larger the index is, the better the steering stability is. Besides, the reference tire is a tire having no sealant layer provided, which has a lap time larger (slower) than that in Examples and Comparative examples. The reference Comparative example is the tire of Comparative example 2 in Table 1 or the tire of Comparative example 4 in Table 2.

(Steering stability) = [(lap time for reference tire - lap time for test tire)/(lap time for reference tire - lap time for tire in reference Comparative example)] × 100

<Air sealing performance>

The sealant tire prepared by the above-described method while being filled with air to an internal pressure of 230 kPa was punched with a nail having a diameter of 4 mm and a length of 50 mm, and an internal pressure immediately after removing the nail after 3 hours was measured. Air sealing performance was indicated as an index according to the following equation. The reference Comparative example is the tire of Comparative example 2 in Table 1 or the tire of Comparative example 4 in Table 2. The results show that the larger the index is, the smaller the drop in internal pressure is and the better the air sealing performance is.

(Air sealing performance index) = (internal pressure of each test tire)/(internal pressure of reference Comparative example) × 100

Besides, a performance target value shall be greater than 200 for an overall performance of steering stability and air sealing performance (a sum of steering stability index and air sealing performance index).

Table 1: Test tire 1 (size: 175/55R20, rim: 5.5×20J)

| | Example | | | | | | Comparative example | |
|---|---|---|---|---|---|---|---|---|
| | 1 | 2 | 3 | 4 | 5 | 6 | 1 | 2 |
| Compounding amount (part by mas s) | | | | | | | | |
| Butyl-based rubber | 100 | 100 | 100 | 100 | 100 | 100 | 100 | 100 |
| Carbon black | 30 | 30 | 30 | 30 | 30 | 30 | 30 | 30 |
| Liquid polymer 1 | 200 | 300 | 200 | 300 | 200 | - | 50 | 400 |
| Liquid polymer 2 | - | - | - | - | - | 200 | - | - |
| Resin component | 20 | 20 | 20 | 20 | 20 | 20 | 20 | 20 |
| Zinc oxide | 8.4 | 8.4 | 2.0 | 2.0 | 1.0 | 8.4 | 8.4 | 8.4 |
| Stearic acid | 1.0 | 1.0 | 1.0 | 1.0 | 1.0 | 1.0 | 1.0 | 1.0 |
| $G^*$ (kPa) | 2.60 | 0.95 | 1.10 | 0.80 | 0.65 | 0.68 | 3.60 | 0.34 |
| EB (%) | 500 | 560 | 610 | 670 | 620 | 650 | 280 | 610 |
| Wt (mm) | 175 | 175 | 175 | 175 | 175 | 175 | 175 | 175 |
| Ht (mm) | 96 | 96 | 96 | 96 | 96 | 96 | 96 | 96 |
| Dt (mm) | 701 | 701 | 701 | 701 | 701 | 701 | 701 | 701 |
| S ($mm^2$) | 450 | 450 | 450 | 450 | 450 | 450 | 450 | 450 |
| V ($mm^3$) | $3.20\times10^7$ | $3.20\times10^7$ | $3.20\times10^7$ | $3.20\times10^7$ | $3.20\times10^7$ | $3.20\times10^7$ | $3.20\times10^7$ | $3.20\times10^7$ |
| Dt-2×Ht | 508 | 508 | 508 | 508 | 508 | 508 | 508 | 508 |
| $(Dt^2\times\pi/4)$/Wt | 2201 | 2201 | 2201 | 2201 | 2201 | 2201 | 2201 | 2201 |
| $(V+1.5\times10^7)$/Wt | $2.69\times10^5$ | $2.69\times10^5$ | $2.69\times10^5$ | $2.69\times10^5$ | $2.69\times10^5$ | $2.69\times10^5$ | $2.69\times10^5$ | $2.69\times10^5$ |
| $(V+2.0\times10^7)$/Wt | $2.97\times10^5$ | $2.97\times10^5$ | $2.97\times10^5$ | $2.97\times10^5$ | $2.97\times10^5$ | $2.97\times10^5$ | $2.97\times10^5$ | $2.97\times10^5$ |
| $(V+2.5\times10^7)$/Wt | $3.25\times10^5$ | $3.25\times10^5$ | $3.25\times10^5$ | $3.25\times10^5$ | $3.25\times10^5$ | $3.25\times10^5$ | $3.25\times10^5$ | $3.25\times10^5$ |
| Dt/$G^*$ | 269 | 737 | 637 | 876 | 1078 | 1030 | 195 | 2060 |
| S/$G^*$ | 173 | 473 | 409 | 563 | 692 | 661 | 125 | 1324 |
| $G^*$×S/Wt | 6.7 | 2.4 | 2.8 | 2.1 | 1.7 | 1.7 | 9.3 | 0.9 |
| Steering stability index | 115 | 104 | 105 | 102 | 101 | 101 | 120 | 100 |
| Air sealing performance index | 90 | 105 | 100 | 109 | 101 | 105 | 60 | 100 |

Table 2: Test tire 2 (size: 205/55R16, rim: 6.5×16J)

| | Example | | | | | |
|---|---|---|---|---|---|---|
| | 7 | 8 | 9 | 10 | 11 | 12 |
| Compounding amount (part by mass) | | | | | | |
| Butyl-based rubber | 100 | 100 | 100 | 100 | 100 | 100 |
| Carbon black | 30 | 30 | 30 | 30 | 30 | 30 |
| Liquid polymer 1 | 200 | 300 | 200 | 300 | 200 | - |
| Liquid polymer 2 | - | - | - | - | - | 200 |
| Liquid polymer 3 | - | - | - | - | - | - |
| Resin component | 20 | 20 | 20 | 20 | 20 | 20 |
| Zinc oxide | 8.4 | 8.4 | 2.0 | 2.0 | 1.0 | 8.4 |
| Stearic acid | 1.0 | 1.0 | 1.0 | 1.0 | 1.0 | 1.0 |
| $G^*$ (kPa) | 2.60 | 0.95 | 1.10 | 0.80 | 0.65 | 0.68 |

(continued)

| | Example | | | | | |
|---|---|---|---|---|---|---|
| | 7 | 8 | 9 | 10 | 11 | 12 |
| Compounding amount (part by mass) | | | | | | |
| EB (%) | 500 | 560 | 610 | 670 | 620 | 650 |
| Wt (mm) | 205 | 205 | 205 | 205 | 205 | 205 |
| Ht (mm) | 113 | 113 | 113 | 113 | 113 | 113 |
| Dt (mm) | 632 | 632 | 632 | 632 | 632 | 632 |
| S (mm$^2$) | 540 | 540 | 540 | 540 | 540 | 540 |
| V (mm$^3$) | $3.77 \times 10^7$ | $3.77 \times 10^7$ | $3.77 \times 10^7$ | $3.77 \times 10^7$ | $3.77 \times 10^7$ | $3.77 \times 10^7$ |
| Dt$-2 \times$Ht | 406 | 406 | 406 | 406 | 406 | 406 |
| (Dt$^2 \times \pi/4$)/Wt | 1947 | 1947 | 1947 | 1947 | 1947 | 1947 |
| (V$+1.5 \times 10^7$)/Wt | $2.57 \times 10^5$ | $2.57 \times 10^5$ | $2.57 \times 10^5$ | $2.57 \times 10^5$ | $2.57 \times 10^5$ | $2.57 \times 10^5$ |
| (V$+2.0 \times 10^7$)/Wt | $2.81 \times 10^5$ | $2.81 \times 10^5$ | $2.81 \times 10^5$ | $2.81 \times 10^5$ | $2.81 \times 10^5$ | $2.81 \times 10^5$ |
| (V$+2.5 \times 10^7$)/Wt | $3.06 \times 10^5$ | $3.06 \times 10^5$ | $3.06 \times 10^5$ | $3.06 \times 10^5$ | $3.06 \times 10^5$ | $3.06 \times 10^5$ |
| Dt/G* | 243 | 665 | 575 | 790 | 972 | 929 |
| S/G* | 208 | 568 | 491 | 675 | 831 | 794 |
| G*$\times$S/Wt | 6.8 | 2.5 | 2.7 | 2.1 | 1.7 | 1.8 |
| Steering stability index | 117 | 105 | 107 | 103 | 101 | 102 |
| Air sealing performance index | 91 | 114 | 103 | 121 | 108 | 117 |

| | Example | | | | Comparative example | |
|---|---|---|---|---|---|---|
| | 13 | 14 | 15 | 16 | 3 | 4 |
| Compounding amount (part by mass) | | | | | | |
| Butyl-based rubber | 100 | 100 | 100 | 100 | 100 | 100 |
| Carbon black | 30 | 30 | 30 | 30 | 30 | 30 |
| Liquid polymer 1 | - | - | 250 | 200 | 50 | 400 |
| Liquid polymer 2 | 150 | - | - | - | - | - |
| Liquid polymer 3 | - | 200 | - | - | - | - |
| Resin component | 20 | 20 | 20 | 20 | 20 | 20 |
| Zinc oxide | 8.4 | 8.4 | 8.4 | 4.0 | 8.4 | 8.4 |
| Stearic acid | 1.0 | 1.0 | 1.0 | 1.0 | 1.0 | 1.0 |
| G* (kPa) | 0.55 | 1.60 | 1.77 | 1.02 | 3.60 | 0.34 |
| EB (%) | 601 | 580 | 530 | 585 | 280 | 610 |
| Wt (mm) | 205 | 205 | 205 | 205 | 205 | 205 |
| Ht (mm) | 113 | 113 | 113 | 113 | 113 | 113 |
| Dt (mm) | 632 | 632 | 632 | 632 | 632 | 632 |
| S (mm$^2$) | 540 | 540 | 540 | 540 | 540 | 540 |
| V (mm$^3$) | $3.77 \times 10^7$ | $3.77 \times 10^7$ | $3.77 \times 10^7$ | $3.77 \times 10^7$ | $3.77 \times 10^7$ | $3.77 \times 10^7$ |
| Dt$-2 \times$Ht | 406 | 406 | 406 | 406 | 406 | 406 |
| (Dt$^2 \times \pi/4$)/Wt | 1947 | 1947 | 1947 | 1947 | 1947 | 1947 |
| (V$+1.5 \times 10^7$)/Wt | $2.57 \times 10^5$ | $2.57 \times 10^5$ | $2.57 \times 10^5$ | $2.57 \times 10^5$ | $2.57 \times 10^5$ | $2.57 \times 10^5$ |
| (V$+2.0 \times 10^7$)/Wt | $2.81 \times 10^5$ | $2.81 \times 10^5$ | $2.81 \times 10^5$ | $2.81 \times 10^5$ | $2.81 \times 10^5$ | $2.81 \times 10^5$ |
| (V$+2.5 \times 10^7$)/Wt | $3.06 \times 10^5$ | $3.06 \times 10^5$ | $3.06 \times 10^5$ | $3.06 \times 10^5$ | $3.06 \times 10^5$ | $3.06 \times 10^5$ |

(continued)

|  | Example | | | | Comparative example | |
|---|---|---|---|---|---|---|
|  | 13 | 14 | 15 | 16 | 3 | 4 |
| Compounding amount (part by mass) | | | | | | |
| Dt/G* | 1149 | 395 | 357 | 620 | 176 | 1859 |
| S/G* | 982 | 338 | 305 | 529 | 150 | 1588 |
| G*×S/Wt | 1.4 | 4.2 | 4.7 | 2.7 | 9.5 | 0.9 |
| Steering stability index | 100 | 110 | 111 | 106 | 125 | 100 |
| Air sealing performance index | 104 | 104 | 101 | 109 | 65 | 100 |

From the results in Tables 1 and 2, it can be found that the sealant tire of the present invention, in which the tire cross-sectional width, the tire outer diameter, and the dynamic complex elastic modulus of the sealant layer are set within predetermined ranges, has improved overall performance of steering stability and air sealing performance.

REFERENCE SIGNS LIST

A. Sealant layer
B. Noise absorbing layer
Wt. Cross-sectional width of sealant tire
Dt. Outer diameter of sealant tire
Ht. Cross-sectional height of sealant tire

**Claims**

1.    A sealant tire comprising a sealant layer (A) on an inner peripheral surface of the tire,

wherein, when a cross-sectional width (Wt) and an outer diameter (Dt) of the sealant tire are defined as Wt, in mm, and Dt, in mm, respectively, the sealant tire being mounted on a standardized rim and having an internal pressure of 250 kPa, Wt and Dt satisfy the following inequality:

$$1600 \leqq (Dt^2 \times \pi/4)/Wt \leqq 2827.4 \ (1),$$

**characterized in that**
a dynamic complex elastic modulus G* measured under a condition of a strain of 100% and a frequency of 0.1 Hz in an atmosphere at 100°C in accordance with ISO 13145 for the sealant layer is 0.50 to 3.50 kPa, and **in that** Dt/G* is 240 or more.

2.    The sealant tire of claim 1, wherein, when a cross-sectional area of the sealant layer (A) is defined as S, in mm$^2$, S/G* is 100 to 3000.

3.    The sealant tire of claim 2, wherein S/G* is 150 to 900.

4.    The sealant tire of any one of claims 1 to 3, when the cross-sectional area of the sealant layer (A) is defined as S, in mm$^2$, G*×S/Wt is 0.5 to 30.

5.    The sealant tire of claim 4, wherein G*×S/Wt is 1.0 to 10.

6.    The sealant tire of any one of claims 1 to 5, having a flattening ratio of 40% or more.

7.    The sealant tire of any one of claims 1 to 6, wherein the outer diameter (Dt) of the sealant tire is less than 843 mm.

8. The sealant tire of any one of claims 1 to 7, wherein the cross-sectional width (Wt) of the sealant tire is less than 305 mm.

9. The sealant tire of any one of claims 1 to 8, wherein, when a cross-sectional height (Ht) of the sealant tire is defined as Ht, in mm, the sealant tire being mounted on a standardized rim and having an internal pressure of 250 kPa, (Dt-2×Ht) is 360 mm or more.

10. The sealant tire of any one of claims 1 to 9, wherein a virtual volume V, in mm$^3$, of a space occupied by the sealant tire and the Wt satisfy the following inequality (3):

$$[(V+1.5\times10^7)/Wt] \leqq 4.02\times10^5 \ (3).$$

11. The sealant tire of claim 10, wherein the virtual volume V, in mm$^3$, of the space occupied by the sealant tire and the Wt satisfy the following inequality (4):

$$[(V+2.0\times10^7)/Wt] \leqq 4.02\times10^5 \ (4).$$

12. The sealant tire of claim 11, wherein the virtual volume V, in mm$^3$, of the space occupied by the sealant tire and the Wt satisfy the following inequality (5):

$$[(V+2.5\times10^7)/Wt] \leqq 4.02\times10^5 \ (5).$$

**Patentansprüche**

1. Dichtstoffreifen, der eine Dichtstofflage (A) an einer Innenumfangsfläche des Reifens aufweist,

   wobei, wenn eine Querschnittsbreite (Wt) und ein Außendurchmesser (Dt) des Dichtstoffreifens jeweils als Wt, in mm, und Dt, in mm, definiert sind, wobei der Dichtstoffreifen an einer standardisierten Felge montiert ist und einen Innendruck von 250 kPa hat, Wt und Dt die folgende Ungleichung erfüllen:

$$1600 \leqq (Dt^2\times\pi/4)/Wt \leqq 2827,4 \ (1),$$

   **dadurch gekennzeichnet, dass**
   ein unter einer Bedingung einer Dehnung von 100 % und einer Frequenz von 0,1 Hz in einer Atmosphäre bei 100 °C in Übereinstimmung mit ISO 13145 gemessener dynamischer komplexer Elastizitätsmodul G* für die Dichtstofflage 0,50 bis 3,50 kPa ist, und dadurch, dass
   Dt/G* 240 oder mehr ist.

2. Dichtstoffreifen nach Anspruch 1, wobei, wenn eine Querschnittsfläche der Dichtstofflage (A) als S, in mm$^2$, definiert ist, S/G* 100 bis 3000 ist.

3. Dichtstoffreifen nach Anspruch 2, wobei S/G* 150 bis 900 ist.

4. Dichtstoffreifen nach einem der Ansprüche 1 bis 3, wobei, wenn die Querschnittsfläche der Dichtstofflage (A) als S, in mm$^2$, definiert ist, G*×S/Wt 0,5 bis 30 ist.

5. Dichtstoffreifen nach Anspruch **4,** wobei G*×S/Wt 1,0 bis 10 ist.

6. Dichtstoffreifen nach einem der Ansprüche 1 bis 5, der ein Abflachungsverhältnis von 40 % oder mehr hat.

7. Dichtstoffreifen nach einem der Ansprüche 1 bis 6, wobei der Außendurchmesser (Dt) des Dichtstoffreifens kleiner als 843 mm ist.

8. Dichtstoffreifen nach einem der Ansprüche 1 bis 7, wobei die Querschnittsbreite (Wt) des Dichtstoffreifens kleiner als 305 mm ist.

**9.** Dichtstoffreifen nach einem der Ansprüche 1 bis 8, wobei, wenn eine Querschnittshöhe (Ht) des Dichtstoffreifens als Ht, in mm, definiert ist, wobei der Dichtstoffreifen an einer standardisierten Felge montiert ist und einen Innendruck von 250 kPa hat, (Dt-2×Ht) 360 mm oder mehr ist.

**10.** Dichtstoffreifen nach einem der Ansprüche 1 bis 9, wobei ein virtuelles Volumen V, in mm$^3$, eines Raums, der durch den Dichtstoffreifen eingenommen ist, und Wt die folgende Ungleichung (3) erfüllen:

$$[(V+1{,}5\times10^7)/Wt] \leqq 4.02\times10^5 \ (3).$$

**11.** Dichtstoffreifen nach Anspruch 10, wobei das virtuelle Volumen V, in mm$^3$, des Raums, der durch den Dichtstoffreifen eingenommen ist, und Wt die folgende Ungleichung (4) erfüllen:

$$[(V+2{,}0\times10^7)/Wt] \leqq 4{,}02\times10^5 \ (4).$$

**12.** Dichtstoffreifen nach Anspruch 11, wobei das virtuelle Volumen V in mm$^3$, des Raums, der durch den Dichtstoffreifen eingenommen ist, und Wt die folgende Ungleichung (5) erfüllen:

$$[(V+2{,}5\times10^7)/Wt] \leqq 4{,}02\times10^5 \ (5).$$

**Revendications**

**1.** Pneu avec produit d'étanchéité, comprenant une couche de produit d'étanchéité (A) sur une surface périphérique intérieure du pneu,

dans lequel, lorsqu'une largeur de section transversale (Wt) et un diamètre extérieur (Dt) du pneu avec produit d'étanchéité sont définis par Wt, en mm, et Dt, en mm, respectivement, le pneu avec produit d'étanchéité étant monté sur une jante standardisée et ayant une pression interne de 250 kPa, Wt et Dt satisfont à l'inégalité suivante :

$$1600 \leqq (Dt^2\times\pi/4)/Wt \leqq 2\ 827{,}4 \ (1),$$

**caractérisé en ce que**
un module d'élasticité complexe dynamique G* mesuré dans une condition d'une déformation de 100 % et une fréquence de 0,1 Hz dans une atmosphère à 100 °C conformément à ISO 13145 pour la couche de produit d'étanchéité est de 0,50 à 3,50 kPa, et **en ce que** Dt/G* est de 240 ou plus.

**2.** Pneu avec produit d'étanchéité de la revendication 1, dans lequel, lorsqu'une superficie de section transversale de la couche de produit d'étanchéité (A) est définie par S, en mm$^2$, S/G* est de 100 à 3 000.

**3.** Pneu avec produit d'étanchéité de la revendication 2, dans lequel S/G* est de 150 à 900.

**4.** Pneu avec produit d'étanchéité de l'une quelconque des revendications 1 à 3, lorsque la superficie de section transversale de la couche de produit d'étanchéité (A) est définie par S, en mm$^2$, G*×S/Wt est de 0,5 à 30.

**5.** Pneu avec produit d'étanchéité de la revendication 4, dans lequel G*×S/Wt est de 1,0 à 10.

**6.** Pneu avec produit d'étanchéité de l'une quelconque des revendications 1 à 5, ayant un rapport d'aplatissement de 40 % ou plus.

**7.** Pneu avec produit d'étanchéité de l'une quelconque des revendications 1 à 6, dans lequel le diamètre extérieur (Dt) du pneu avec produit d'étanchéité est inférieur à 843 mm.

8. Pneu avec produit d'étanchéité de l'une quelconque des revendications 1 à 7, dans lequel la largeur de section transversale (Wt) du pneu avec produit d'étanchéité est inférieure à 305 mm.

9. Pneu avec produit d'étanchéité de l'une quelconque des revendications 1 à 8, dans lequel, lorsqu'une hauteur de section transversale (Ht) du pneu avec produit d'étanchéité est définie par Ht, en mm, le pneu avec produit d'étanchéité étant monté sur une jante standardisée et ayant une pression interne de 250 kPa, (Dt-2×Ht) est de 360 mm ou plus.

10. Pneu avec produit d'étanchéité de l'une quelconque des revendications 1 à 9, dans lequel un volume virtuel V, en $mm^3$, d'un espace occupé par le pneu avec produit d'étanchéité et la Wt satisfont à l'inégalité suivante (3) :

$$[(V+1{,}5\times10^7)/Wt] \leqq 4{,}02\times10^5 \quad (3).$$

11. Pneu avec produit d'étanchéité de la revendication 10, dans lequel le volume virtuel V, en $mm^3$, de l'espace occupé par le pneu avec produit d'étanchéité et la Wt satisfont à l'inégalité suivante (4) :

$$[(V+2{,}0\times10^7)/Wt] \leqq 4{,}02\times10^5 \quad (4).$$

12. Pneu avec produit d'étanchéité de la revendication 11, dans lequel le volume virtuel V, en $mm^3$, de l'espace occupé par le pneu avec produit d'étanchéité et la Wt satisfont à l'inégalité suivante (5) :

$$[(V+2{,}5\times10^7)/Wt] \leqq 4{,}02\times10^5 \quad (5).$$

# FIG. 1

**EP 4 306 336 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012176476 A1
- WO 2017094653 A1
- JP 2018003007 A
- EP 2125392 A1